Europäisches Patentamt

European Patent Office

Office européen des brevets

(19)

(11) Numéro de publication : **0 033 020**
**B1**

# (12) FASCICULE DE BREVET EUROPÉEN

(45) Date de publication du fascicule du brevet :
11.05.83

(21) Numéro de dépôt : **80201053.8**

(22) Date de dépôt : **06.11.80**

(51) Int. Cl.³ : **B 64 B   1/40**, G 01 N   1/08

(54) **Procédé et moyens pour le lancement et le gonflage d'un ballon spatial.**

(30) Priorité : 04.01.80 FR 8000344

(43) Date de publication de la demande :
05.08.81 Bulletin 81/31

(45) Mention de la délivrance du brevet :
11.05.83 Bulletin 83/19

(84) Etats contractants désignés :
**AT BE CH DE GB IT LI LU NL SE**

(56) Documents cités :
**FR A 1 150 008**
**FR A 2 132 569**
**FR A 2 136 919**
**US A 2 783 002**
**US A 3 484 058**

(73) Titulaire : **CENTRE NATIONAL D'ETUDES SPATIALES**
**129, Rue de l'Université**
**F-75007 Paris (FR)**

(72) Inventeur : **Regipa, Robert**
**226, avenue de Saint-Exupéry Bâtiment Provence**
**F-31400 Toulouse (FR)**

(74) Mandataire : **Barre, Philippe**
**Cabinet Barre-Gatti-Laforgue 93-95 rue des Amidon-**
**niers**
**F-31069 Toulouse Cedex (FR)**

## Procédé et moyens pour le lancement et le gonflage d'un ballon spatial

L'invention concerne un procédé de lancement et de gonflage d'un ballon spatial entraînant une charge ; elle vise en particulier le lancement de ballons de grands volumes pour l'exploration des hautes couches stratosphériques. L'invention s'étend à un ballon porteur permettant la mise en œuvre de ce procédé de lancement.

On sait que l'envoi de ballons de grands volumes à très haute altitude pose actuellement des problèmes mal résolus. En premier lieu, de graves difficultés de gonflage apparaissent au sol lorsque les conditions météorologiques ne sont pas favorables ; l'enveloppe du ballon peut être le siège de contraintes importantes dues au vent, qui entraînent parfois des déchirures de celle-ci. De plus, même en l'absence de vent, le gonflage du ballon en un point fixe conditionne une répartition des tensions sur l'enveloppe très différente de la répartition en vol à l'état gonflé, avec des surtensions locales obligeant soit à surdimensionner le matériau de l'enveloppe pour lui permettre de supporter la phase de gonflage au point fixe, soit à prendre un certain nombre de précautions qui compliquent et renchérissent le lancement (mise en place de cape, etc...).

Par ailleurs, au cours de son ascension, le ballon rencontre des conditions très sévères, d'une part, lors de la traversée des basses couches de fortes densités, qui sont le siège de turbulences importantes, d'autre part, lors de la traversée de la tropopause qui correspond à la zone la plus froide de l'atmosphère (− 70° à − 80 °C) et est le siège de courants horizontaux à gradient de vitesse très élevé.

Dans les basses couches, l'expansion du ballon est encore peu importante et les efforts qui s'exercent sur celui-ci sont supportés par une surface réduite d'enveloppe, ce qui conditionne des contraintes élevées par unité de surface. Dans la tropopause, les basses températures entraînent une fragilisation du matériau de l'enveloppe qui devient peu apte à supporter les contraintes dues au gradient de vitesse ; ces contraintes engendrent des effets de cisaillement d'autant plus forts que le ballon présente un volume important.

Il s'ensuit que les ballons spatiaux subissent fréquemment des détériorations dans ces couches qui peuvent aller pour de gros ballons (de l'ordre d'un million de $m^3$ ou plus) jusqu'à une dislocation totale de ceux-ci.

Par ailleurs, on connaît des techniques de lancement qui utilisent une bulle auxiliaire de lancement de façon à réduire les difficultés de gonflage au sol du ballon principal (brevet FR-A-2132569). Toutefois, durant l'ascension l'enveloppe du ballon supporte toute la charge et est soumise à des contraintes élevées comme dans le procédé traditionnel évoqué précédemment (où le ballon principal est lancé seul).

La présente invention se propose d'apporter une solution aux problèmes ci-dessus évoqués et de permettre aux ballons spatiaux d'atteindre les couches stratosphériques à explorer sans risque de détérioration.

A cet effet, l'invention se propose d'indiquer un nouveau procédé de lancement et de gonflage d'un ballon spatial, permettant de réduire considérablement les contraintes qui s'exercent sur son enveloppe, en particulier pendant la traversée des basses couches et de la tropopause.

Le procédé conforme à l'invention pour le lancement et le gonflage d'un ballon spatial entraînant une charge est du type dans lequel on utilise un ballon porteur auxiliaire de volume plus faible que le ballon spatial, on attache le ballon spatial à l'état dégonflé au-dessous du ballon porteur et on gonfle partiellement le ballon porteur au moyen d'un gaz plus léger que l'air pour engendrer l'envol des deux ballons et, après l'envol, un transfert de gaz dans le ballon spatial ; conformément à la présente invention le procédé se caractérise en ce que :

— on utilise un ballon spatial équipé d'un lien axial non extensible ou peu extensible auquel est fixé le pôle supérieur dudit ballon et le long duquel peut coulisser son pôle inférieur jusqu'à une position fixe prédéterminée dudit pôle inférieur sur ledit lien axial, la charge étant accrochée audit lien axial,

— on utilise un ballon porteur auxiliaire, pourvu d'un lien axial non extensible ou peu extensible entre son pôle supérieur et son pôle inférieur, et présentant une résistance élevée adaptée pour supporter les contraintes engendrées dans les couches atmosphériques à traverser,

— on attache le ballon spatial à l'état dégonflé au-dessous du ballon porteur, d'une part, en reliant par un lien les liens axiaux des deux ballons, d'autre part, en disposant entre ceux-ci une manche de transfert de gaz réunissant les volumes internes de leur enveloppe,

— après l'envol et le transfert d'une quantité de gaz déterminée dans le ballon spatial, on engendre la fermeture de la manche de transfert,

— on engendre la séparation du ballon spatial et du ballon porteur, en sectionnant la manche de transfert et le lien reliant les deux ballons,

— on assure, après coulissement du pôle inférieur du ballon spatial le long du lien axial, le blocage dudit pôle inférieur sur ledit lien axial dans la position prédéterminée sus-évoquée, permettant l'obtention de l'état de plénitude du ballon spatial.

Notons que les trois dernières opérations (fermeture de la manche, séparation des ballons et blocage du pôle inférieur du ballon spatial) peuvent être exécutées successivement dans un ordre prédéterminé ou bien à peu près simultanément à une altitude donnée.

De préférence, le ballon spatial est logé, à l'état dégonflé, dans une gaine de protection ayant une génératrice de moindre résistance autorisant la rupture de ladite gaine lors du gonflage du ballon.

Dans le procédé de l'invention on utilise donc un ballon porteur auxiliaire de petites dimensions qui entraîne le ballon spatial dans les basses couches et la tropopause à l'état entièrement replié, (de préférence protégé par une gaine), l'enveloppe dudit ballon spatial ne supportant, au cours de l'ascension, que son propre poids puisque la charge est accrochée au lien axial dudit ballon, qui est relié au lien axial du ballon porteur ; à haute altitude, le pôle supérieur et pôle inférieur du ballon spatial sont bloqués l'un par rapport à l'autre sur le lien axial qui les relie.

Dans ces conditions, le ballon spatial n'est soumis à aucune surtension tant au sol qu'au cours de l'ascension, de sorte qu'il peut être spécialisé pour le vol en haute altitude, être fabriqué au moyen d'un film léger et très fin et posséder un volume très important sans aucun inconvénient.

Le ballon porteur de petites dimensions qui ne participe pas ensuite à la mission peut être doté, à moindre coût, d'une résistance élevée, le mettant à l'abri de toute détérioration au sol et pendant l'ascension, et ce d'autant plus que son faible volume le rend moins vulnérable à l'égard des gradients de vitesse de vent et que le lien qui relie son pôle supérieur et son pôle inférieur supporte une partie des tensions et réduit celles qui s'exercent sur son enveloppe.

Le ballon porteur de petites dimensions est facile à manipuler au sol et son envol s'effectue sans difficulté.

Le ballon spatial n'est l'objet au sol d'aucune manipulation risquant d'endommager son enveloppe ; il est simplement étendu sur le sol dans sa gaine de protection et son lien axial est relié au lien axial du ballon porteur qui le soulève progressivement au cours de la phase d'envol.

Le ballon porteur utilisé peut en particulier être un ballon de forme générale allongée cylindrique, ayant une hauteur très supérieure à son diamètre ; la manipulation au sol et le lancement d'un ballon de cette forme sont notablement simplifiés, cependant que la fabrication d'un tel ballon peut être réalisée à très bas coût au moyen de fuseaux allongés, présentant une largeur constante sur une grande partie de leur hauteur ; la découpe et l'assemblage de tels fuseaux le long de lignes rectilignes sur leur plus grande longueur sont des opérations faciles et peu onéreuses.

Le ballon spatial, quant à lui, est réalisé par tout procédé connu, pour présenter à l'état de plénitude une forme adaptée à la mission envisagée ; il peut être réalisé en film très mince, de faible masse surfacique.

Par ailleurs, selon une autre caractéristique de l'invention, la manche de transfert située entre le ballon porteur et le ballon spatial est prolongé vers le bas à l'intérieur du ballon spatial par une manche souple, déformable ; la fermeture, après transfert d'une quantité de gaz appropriée, peut ainsi être assurée de façon naturelle par déformation de cette manche souple sous l'effet des pressions hydrostatiques exercées autour de celle-ci par le gaz contenu dans le ballon spatial.

L'invention s'étend, à titre de moyen nouveau, à un ballon porteur pour la mise en œuvre du procédé décrit précédemment ; ce ballon porteur est caractérisé en ce qu'il comprend un lien entre son pôle inférieur et son pôle supérieur et en ce qu'il présente une forme générale allongée, très approximativement cylindrique sur une grande partie de sa hauteur.

D'autres caractéristiques, buts et avantages de l'invention se dégageront de la description qui suit en référence aux dessins annexés, lesquels sont donnés à titre d'exemples non limitatifs pour illustrer l'invention ; sur ces dessins qui font partie intégrante de la description :

la figure 1 est une vue schématique d'un ballon porteur conforme à l'invention, supposé à l'état de plénitude,

la figure 2 est une coupe de détail de ce ballon porteur, au niveau de son pôle inférieur,

la figure 3 est une vue d'un fuseau longiforme à partir duquel est fabriqué le ballon porteur, et

les figures 4 et 5 sont des vues de détail illustrant l'assemblage de ces fuseaux,

la figure 6 est une vue schématique d'un ballon spatial destiné à être lancé par le procédé de l'invention, ce ballon étant à cette figure supposé dans un état intermédiaire entre l'état replié et l'état de plénitude,

la figure 7 est une coupe de détail de ce ballon spatial au niveau de son pôle supérieur et la figure 8 une coupe de détail au niveau de son pôle inférieur,

la figure 9 est une vue schématique de la manche de transfert reliant le ballon porteur et le ballon spatial,

les figures 10, 11, 12, 13, 14 et 15 illustrent schématiquement le déroulement du procédé de lancement et de gonflage conforme à l'invention.

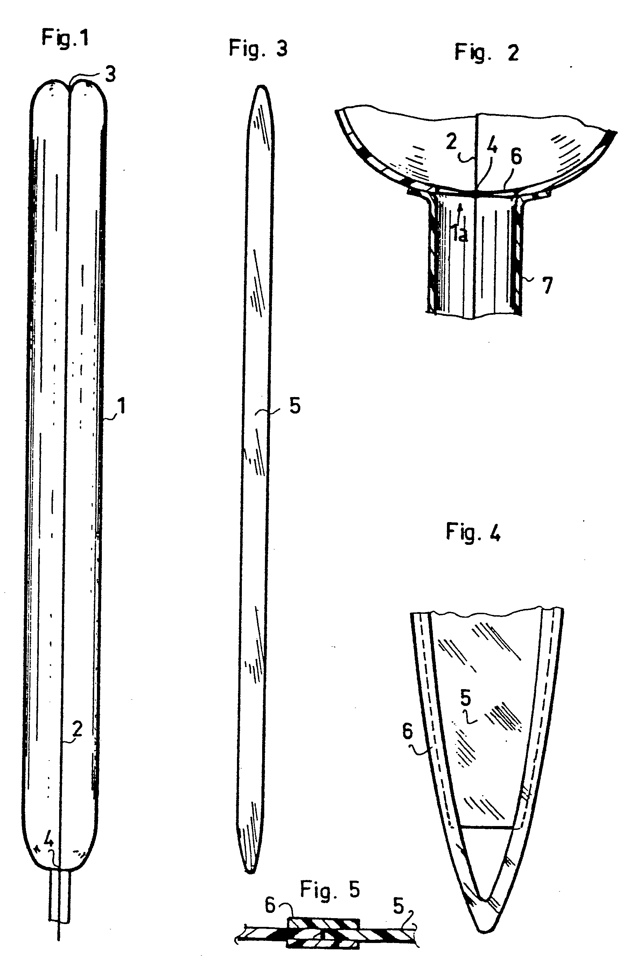

Le ballon porteur auxiliaire 1 schématisé à la figure 1 présente une forme sensiblement cylindrique de faible diamètre par rapport à sa hauteur ; il comprend un lien axial non extensible 2, par exemple un câble en polyester tressé, qui relie son pôle supérieur 3 et son pôle inférieur 4.

Ce ballon porteur est réalisé au moyen de fuseaux tels que 5, de largeur constante sur une grande partie de leur hauteur et qui se rétrécissent au voisinage de leurs extrémités. Ces fuseaux peuvent être en un film de polyéthylène renforcé d'épaisseur de l'ordre de 50 microns. Ces fuseaux sont assemblés bord à bord au moyen de bandes de renfort longitudinales telles que 6, aptes à supporter une partie des efforts longitudinaux s'exerçant sur l'enveloppe.

En l'exemple représenté à la figure 5, l'assemblage de deux fuseaux est réalisé au moyen de deux bandes de renfort disposées de part et d'autre du film.

A l'extrémité inférieure, les fuseaux sont interrompus pour former une ouverture 1a ; les bandes de renfort se prolongent au niveau de celle-ci comme le montre la figure 2 et sont fixées ensemble sur le lien axial de façon à transmettre à celui-ci une partie des efforts.

En outre, une manche de transfert 7 est fixée sous le ballon porteur en regard de l'ouverture 1a de celui-ci.

De façon analogue, au niveau du pôle supérieur 3, les bandes de renfort sont fixées sur le lien axial en vue de la transmission des efforts. Un clapet peut être de façon classique monté au niveau de ce pôle supérieur pour autoriser un pilotage vertical du ballon porteur.

A titre de simple illustration, un exemple des dimensions d'un tel ballon porteur supposé à l'état de plénitude est indiqué ci-après :
— hauteur de l'ordre de 115 m,
— diamètre de l'ordre de 9,2 m,
— volume de l'ordre de 7 700 m³.

Un tel ballon de volume modeste est de fabrication facile et peu onéreuse en raison notamment de la forme de ses fuseaux aux bords rectilignes. La combinaison d'un film à résistance élevée, de bandes de renfort longitudinales et du lien axial permet de réaliser un ballon porteur apte à supporter des contraintes importantes et à traverser sans dommage les couches inférieures de l'atmosphère et la tropopause, en entraînant une charge importante.

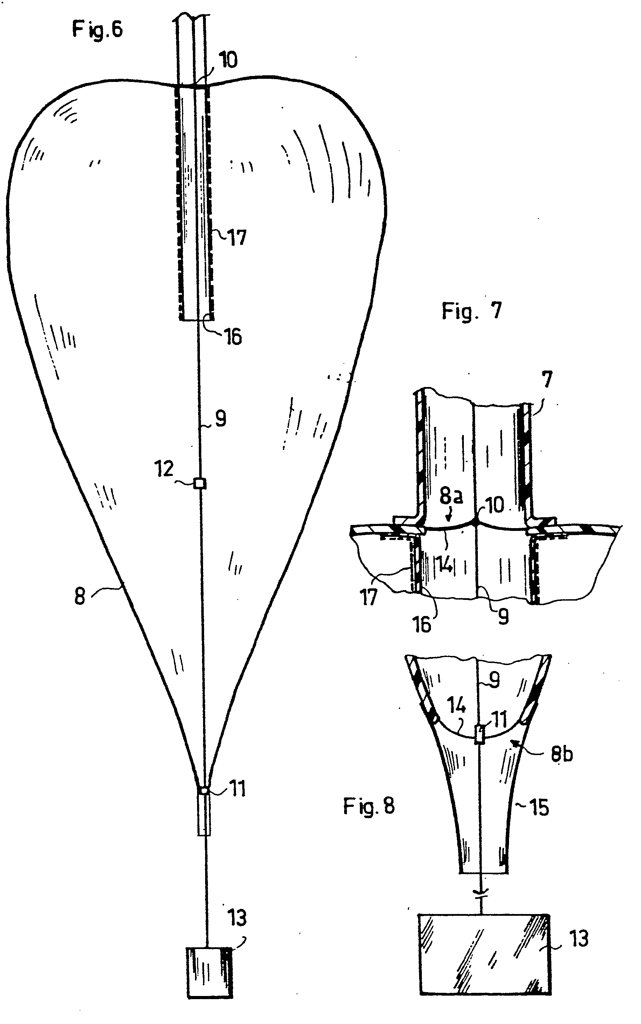

Les figures 6, 7 et 8 schématisent un ballon spatial, appelé à être lancé au moyen du ballon porteur ci-dessus décrit.

Ce ballon spatial est constitué par une enveloppe 8 réalisée en un film de polyester, de très faible épaisseur inférieure à 10 microns ; ce ballon comporte un lien axial 9 du même type que celui du ballon porteur. Le pôle supérieur 10 du ballon spatial est lié à ce lien axial, cependant que le pôle inférieur 11 peut coulisser le long de ce lien jusqu'à atteindre une position finale où il se bloque au niveau d'un organe 12 assujetti sur le lien axial.

Ce blocage peut être réalisé par encliquettage d'un organe solidaire du pôle 11 avec l'organe conjugué 12 fixé sur le lien.

Le lien axial 9 se prolonge au-dessous du ballon spatial et une charge 13 est accrochée à l'extrémité de celui-ci.

L'enveloppe 8 peut être réalisée comme pour le ballon porteur au moyen d'une pluralité de fuseaux longitudinaux assemblés bord à bord au moyen de bandes de renfort longitudinales. Au niveau du pôle supérieur 9 du ballon, les fuseaux sont interrompus pour former une ouverture 8a et les bandes de renfort (que l'on aperçoit en 14 à la figure 7) se prolongent jusqu'au lien axial 9 pour être fixées sur celui-ci.

Au niveau du pôle inférieur 11 (figure 8), une ouverture 8b est prévue de façon analogue avec fixation des bandes de renfort 14 sur l'organe coulissant guidé par le lien axial. Une manche d'évacuation classique 15 est fixée sous le ballon en regard de l'ouverture 8b en vue de permettre une évacuation de gaz au plafond.

Par ailleurs, au niveau du pôle supérieur, une manche souple et déformable 16 réalisée en polyéthylène d'environ 20 microns d'épaisseur est fixée à l'intérieur du ballon spatial autour de l'ouverture 8a en prolongement de la manche de transfert 7. Cette manche souple 16 s'étend sur une partie de la longueur du câble axial 9 de sorte que le gaz transféré assure une expansion du ballon à peu près sur toute sa hauteur.

Cette manche souple 16 est appelée à faire office de clapet de fermeture lorsque la pression hydrostatique à l'intérieur du ballon spatial atteint une valeur déterminée ; elle est entourée par un fourreau 17, résistant et perméable au gaz. Ce fourreau évite que se produise, lors du transfert de gaz, une déformation centrifuge de la manche souple 16, tout en permettant à cette manche de se déformer dans le sens centripète.

A titre de simple illustration, un exemple de dimensions d'un tel ballon spatial supposé à l'état de plénitude est indiqué ci-après :
— hauteur de l'ordre de 150 m,
— diamètre de l'ordre de 144 m
— volume de l'ordre de 2 350 000 m³.

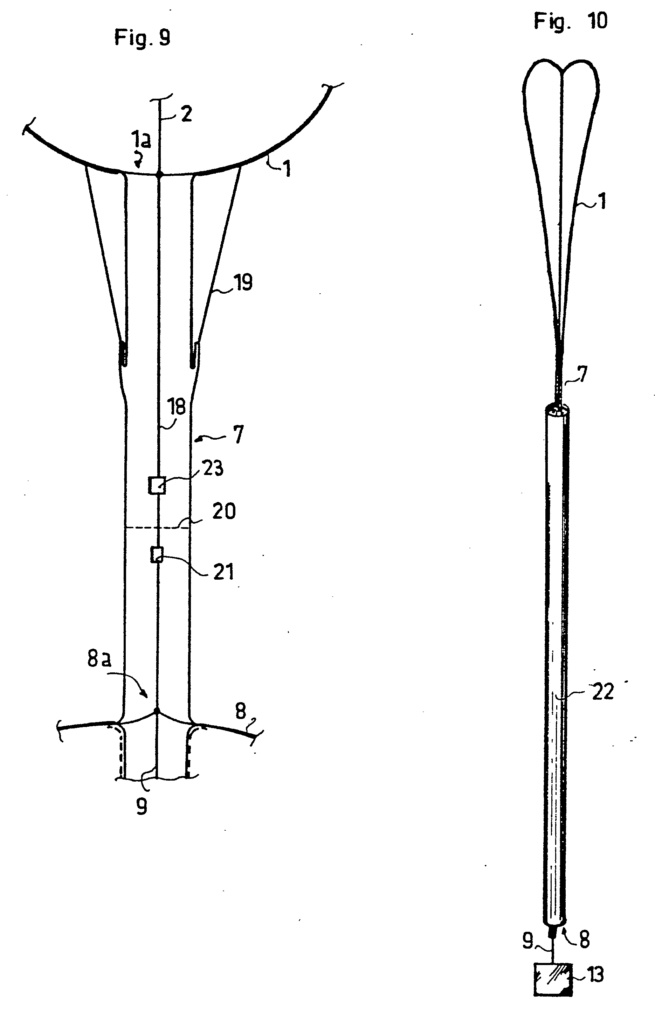

A la figure 9 on a schématisé la manche de transfert 7 qui relie le ballon porteur 1 et le ballon spatial 8 et permet de mettre en communication les ouvertures 1a et 8a de ces ballons ; cette manche est réalisée en un matériau de type polyéthylène renforcé, d'épaisseur de l'ordre de 50 microns ; de façon à présenter une résistance élevée ; elle contient un lien 18 prolongeant et reliant les liens axiaux 2 et 9 des ballon porteur et ballon spatial.

La manche de transfert 7 est dotée d'un dispositif anti-torsion schématisé en 19 qui peut être constitué par plusieurs tirants élastiques accrochés sous le ballon porteur et sur la manche de façon à exercer sur cette dernière une traction élastique vers le haut.

De plus, la manche 7 est munie d'un organe de type classique pour la sectionner à la commande. Cet organe peut être constitué par une boucle de fil électrique 20, insérée dans le matériau de la manche et reliée à une source électrique pour assurer son échauffement à la commande et engendrer la rupture de la manche. On ne donnera pas plus de détail sur ce type d'organe, bien connu en lui-même.

Par ailleurs, le lien 18 est lui-même muni d'un organe 21 permettant d'engendrer sa rupture à la commande. Cet organe également classique en lui-même peut être constitué par une charge explosive ou par un organe mécanique comprenant deux pièces accrochées l'une à l'autre et adaptées pour se séparer à la commande.

Le lien 18 est en outre équipé d'un organe 23 de mesure de la tension s'exerçant sur celui-ci ; cet organe est agencé pour commander l'organe 20 et l'organe 21 lorsque cette tension s'abaisse, en vol, jusqu'à une valeur prédéterminée, afin d'engendrer la séparation du ballon spatial 8 et du ballon porteur 1.

Ce type de commande et d'organe de mesure est connu en soi.

Les diverses caractéristiques du ballon porteur, du ballon spatial et de leur liaison ayant été décrites, on va indiquer ci-après le déroulement des opérations de lancement et de gonflage en référence aux figures 10 à 15. Bien entendu, ces figures ne sont que des schémas explicatifs, simplement fournis pour faciliter la compréhension du procédé de l'invention.

Le ballon spatial 8 est logé à l'état dégonflé dans une gaine 22, qui le protège sur toute sa hauteur et écarte les risques de détérioration de son enveloppe pendant le transport et le lancement ; cette gaine est mise en place immédiatement après la fabrication du ballon, de façon à éviter que celui-ci soit manipulée, en raison de la grande fragilité du film mince qui le forme.

La charge 13 est accrochée à l'extrémité du câble axial 9 et l'ensemble ballon porteur 1, manche de transfert 7 et ballon spatial 22 dans sa gaine est étendu sur le sol sur l'aire de lancement.

Le ballon porteur est partiellement gonflé à l'hélium ou à l'hydrogène, de façon classique par une manche de gonflage non représentée ; peu à peu, le ballon porteur décolle et soulève progressivement le ballon spatial. Une mesure de la poussée d'Archimède peut être effectuée au niveau de la charge 13 et lorsque cette poussée atteint une valeur donnée correspondant à une quantité de gaz dans le ballon porteur adaptée à la mission, la charge 13 est libérée et l'ensemble s'élève dans l'atmosphère. Par exemple, si l'on suppose que le ballon porteur a une capacité de 7 700 m$^3$ à l'état de plénitude et que le poids de l'ensemble (y compris la charge) est de 1 000 kgf, ce ballon porteur peut être gonflé au sol pour atteindre un volume de l'ordre de 1 220 m$^3$, ce qui détermine au moment de la libération une force résultante dirigée vers le haut de l'ordre de 1 100 kgf.

Il est à noter que la charge 13 est directement supportée par le ballon porteur par l'entremise du câble 9 et du câble 18, l'enveloppe du ballon spatial n'étant soumise à aucune charge autre que son propre poids. En outre, la forme allongée de l'ensemble et les dimensions modestes du ballon porteur rendent les opérations de lancement d'exécution facile.

Au cours de la première phase ascensionnelle, le ballon porteur subit une expansion qui l'amène à son état de plénitude. Dans l'exemple susévoqué, cet état est atteint à une altitude de l'ordre de 15 km, après traversée des basses couches atmosphériques.

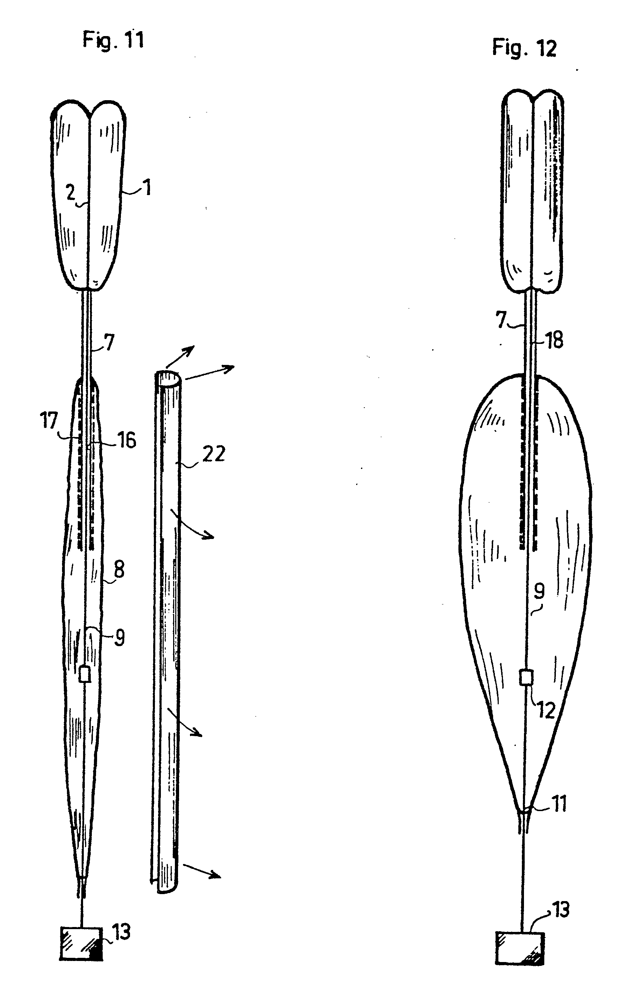

Le transfert du gaz vers le ballon spatial 8, à travers la manche 7 commence alors : la manche souple intérieure 16 commence à gonfler sur toute sa longueur jusqu'à s'appliquer contre son fourreau 17 puis le ballon spatial gonfle à son tour comme le schématise la figure 11, jusqu'à rompre la gaine 22 qui se détache de l'ensemble.

Au cours des phases suivantes de l'ascension, le ballon spatial reçoit du gaz par la manche de transfert et poursuit son expansion. Son pôle inférieur 11 coulisse peu à peu vers le haut le long du câble axial 9, comme l'illustre la figure 12.

Lorsque ce pôle parvient au niveau de l'organe 12 solidaire du câble 9, il se bloque par encliquetage sur celui-ci et l'expansion du ballon se poursuit avec une liaison non extensible entre son pôle inférieur et son pôle supérieur. Dans l'exemple précité, cet encliquetage peut se produire à une altitude de l'ordre de 40 km.

Au cours de l'ascension, le ballon spatial participe progressivement à l'entraînement de la charge et la tension sur le câble 18 reliant les deux ballons diminue ; lorsque cette tension atteint une valeur prédéterminée, calculée en fonction de l'altitude de séparation désirée, la manche de transfert 7 et le câble 18 sont sectionnés. Cette séparation peut en particulier être effectuée après traversée de la tropopause à une altitude d'environ 26,5 km.

Le ballon porteur qui est alors libéré de la charge s'échappe vers le haut à une vitesse ascensionnelle supérieure à celle du ballon spatial.

La pression hydrodynamique qui s'exerce sur la manche souple 16 provoque la fermeture de celle-ci comme le schématise la figure 14 et l'expansion naturelle du ballon se poursuit jusqu'à atteindre son état de plénitude.

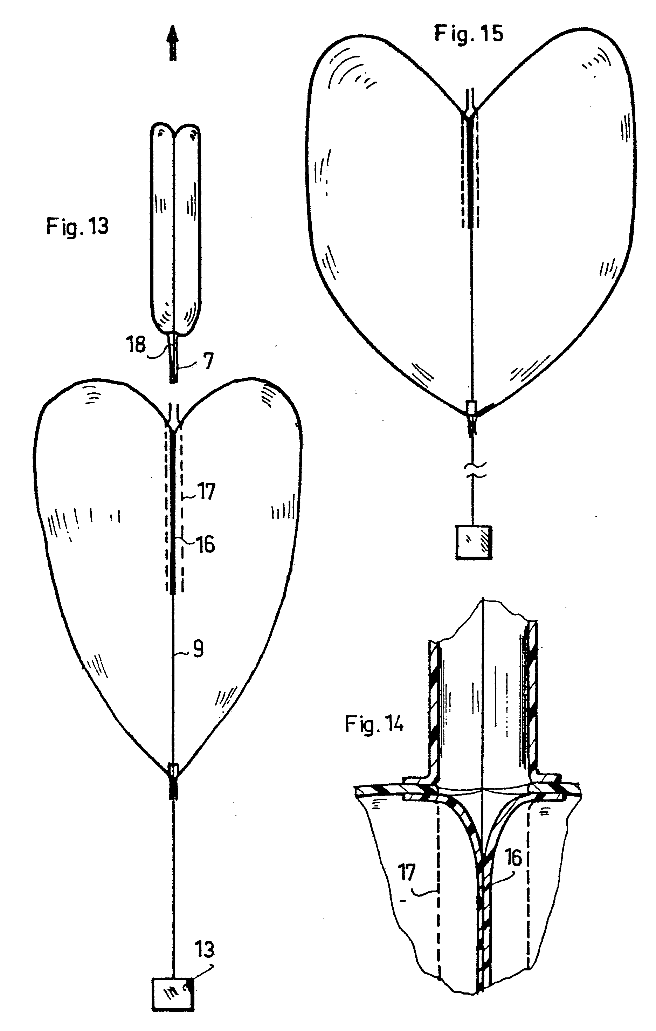

A titre d'exemple, on a représenté à échelle plus réduite à la figure 15 le profil d'un ballon cardiocylindrique à l'état de plénitude, dont le volume peut être de l'ordre de 2 350 000 m$^3$ à une altitude de 56 km, pour une charge transportée de 100 kg.

Le procédé de lancement et de gonflage susévoqué permet de rendre très progressive l'application des tensions sur le ballon spatial et réduit considérablement les surtensions locales et les risques de déchirure ou de dislocation de celui-ci, malgré la très faible masse surfacique de son matériau.

**Revendications**

1. Procédé de lancement et de gonflage d'un ballon spatial entraînant une charge, du type dans lequel on utilise un ballon porteur auxiliaire de volume plus faible que le ballon spatial, on attache le ballon spatial à l'état dégonflé au-dessous du ballon porteur et on gonfle partiellement le ballon porteur au moyen d'un gaz plus léger que l'air pour engendrer l'envol des deux ballons et, après l'envol, un transfert de gaz dans le ballon spatial, ledit procédé étant caractérisé en ce que :

— on utilise un ballon spatial (8) équipé d'un lien axial (9) non extensible ou peu extensible auquel est fixé le pôle supérieur (10) dudit ballon et le long duquel peut coulisser son pôle inférieur (11) jusqu'à une position fixe prédéterminée dudit pôle inférieur sur ledit lien axial, la charge (13) étant accrochée audit lien axial,

— on utilise un ballon porteur auxiliaire (1), pourvu d'un lien axial (2) non extensible ou peu extensible entre son pôle supérieur (3) et son pôle inférieur (4), et présentant une résistance élevée adaptée pour supporter les contraintes engendrées dans les couches atmosphériques à traverser,

— on attache le ballon spatial (8) à l'état dégonflé au-dessous du ballon porteur (1), d'une part, en reliant par un lien (18) les liens axiaux (9, 2) des deux ballons, d'autre part, en disposant entre ceux-ci une manche de transfert de gaz (7) réunissant les volumes internes de leur enveloppe,

— après l'envol et le transfert d'une quantité de gaz déterminée dans le ballon spatial (8), on engendre la fermeture de la manche de transfert (7),

— on engendre la séparation du ballon spatial (8) et du ballon porteur (1), en sectionnant la manche de transfert (7) et le lien (18) reliant les deux ballons,

— on assure, après coulissement du pôle inférieur (11) du ballon spatial le long du lien axial (9), le blocage dudit pôle inférieur sur ledit lien axial dans la position prédéterminée sus-évoquée, permettant l'obtention de l'état de plénitude du ballon spatial.

2. Procédé de lancement et de gonflage selon la revendication 1, caractérisé en ce que l'on utilise un ballon porteur (1) de forme générale allongée cylindrique, ayant une hauteur très supérieure à son diamètre.

3. Procédé de lancement et de gonflage selon l'une des revendications 1 ou 2, caractérisé en ce que l'on utilise un ballon porteur (1) réalisé en un film de résistance mécanique élevée et en ce que l'on utilise un ballon spatial (8) réalisé en un film très mince de faible masse surfacique.

4. Procédé de lancement et de gonflage selon l'une des revendications 1, 2 ou 3, dans lequel on utilise un ballon porteur (1) et/ou un ballon spatial (8), réalisés au moyen de fuseaux longitudinaux (5), assemblés bord à bord au moyen de bandes de renfort longitudinales (6) aptes à supporter les efforts longitudinaux s'exerçant sur l'enveloppe des ballons, ledit procédé étant caractérisé en ce que l'on fixe la manche de transfert (7) sur l'enveloppe de chacun des ballons autour d'une ouverture (1a, 8a) aménagée sur cette enveloppe, que l'on utilise des ballons dont les bandes de renfort (6) se prolongent au niveau de cette ouverture jusqu'au lien axial et que l'on assujettit lesdites bandes de renfort sur ledit lien axial.

5. Procédé de lancement et de gonflage selon la revendication 4, caractérisé en ce que l'on utilise un ballon porteur réalisé au moyen de fuseaux allongés (5) présentant une largeur constante sur une grande partie de leur hauteur.

6. Procédé de lancement et de gonflage selon l'une des revendications 1, 2, 3, 4 ou 5, caractérisé en ce que l'on loge le ballon spatial (8) à l'état dégonflé dans une gaine de protection (22) ayant une génératrice de moindre résistance autorisant la rupture de ladite gaine lors du gonflage du ballon.

7. Procédé de lancement et de gonflage selon l'une des revendications 1, 2, 3, 4, 5 ou 6, caractérisé en ce que, la manche de transfert (7) étant prolongée à l'intérieur du ballon spatial par une manche souple déformable (16), la fermeture après transfert d'une quantité de gaz déterminée dans le ballon spatial est assurée par déformation de ladite manche souple (16) sous l'effet des pressions hydrostatiques exercées autour de celle-ci par le gaz contenu dans le ballon spatial.

8. Procédé de lancement et de gonflage selon la revendication 7, caractérisé en ce que l'on entoure la manche souple (16) précitée d'un fourreau résistant (17), perméable au gaz, apte à éviter une déformation contrifuge de ladite manche souple.

9. Procédé de lancement et de gonflage selon l'une des revendications 1, 2, 3, 4, 5, 6, 7 ou 8, caractérisé en ce que le blocage du pôle inférieur (11) du ballon spatial (8) sur le lien (9) est réalisé par encliquetage d'un organe solidaire dudit pôle avec un organe conjugué (12) fixé sur le lien.

10. Procédé de lancement selon l'une des revendications 1, 2, 3, 4, 5, 6, 7, 8 ou 9, dans lequel on équipe la manche de transfert (7) entre les deux ballons d'un dispositif anti-torsion (19).

11. Procédé de lancement selon l'une des revendications 1, 2, 3, 4, 5, 6, 7, 8, 9 ou 10, caractérisé en ce que l'on équipe le lien (18) reliant les deux ballons d'un organe (23) de mesure de la tension de ce lien, la séparation du ballon spatial (8) et du ballon porteur (1) étant commandée lorsque ladite tension s'abaisse jusqu'à une valeur prédéterminée.

12. Ballon porteur pour la mise en œuvre du procédé conforme à l'une des revendications précédentes, caractérisé en ce qu'il comprend un lien (2) entre son pôle inférieur (4) et son pôle supérieur (3) et en ce qu'il présente une forme générale allongée très approximativement cylindrique sur une grande partie de sa hauteur.

13. Ballon porteur selon la revendication 12, réalisé au moyen de fuseaux longitudinaux (5), assemblés bord à bord au moyen de bandes de renfort longitudinales (6), caractérisé en ce que les fuseaux (5) dudit ballon présentent chacun une largeur approximativement constante sur une grande partie de leur hauteur, les bandes de renfort (6) se prolongeant au niveau d'une ouverture (1a) aménagée au pôle inférieur (4) du ballon jusqu'au lien axial (2) auquel elles sont assujetties.

**Claims**

1. Process for launching and inflating a space balloon carrying a load, of the type wherein there is used an auxiliary carrier balloon having a volume smaller than that of the space balloon, the space balloon is fastened in its deflated condition underneath the carrier balloon, and the carrier balloon is partially inflated by means of a gas which is lighter than air in order to bring about the take-off of the two balloons, and after take-off, a transfer of gas into the space balloon, said process being characterized in that :

— a space balloon (8) is utilized which is provided with a non-stretchable or hardly stretchable axial cable (9) to which the upper pole (10) of said balloon is fixed and along which its lower pole (11) can slide until it reaches a predetermined fixed position of said lower pole on said axial cable, the load (13) being hooked onto said axial cable,

— an auxiliary carrier balloon (1) is used which is provided with a non-stretchable or hardly stretchable axial cable (2) between its upper pole (3) and its lower pole (4), and which has a high resistance adapted to withstand the strains generated in the atmospheric layers to be travelled through,

— the space balloon (8) is, in its inflated condition, fastened underneath the carrier balloon (1), on the one hand by interconnecting the axial cables (9, 2) of the two balloons by means of a cable (18), and, on the other hand, by fitting therebetween a gas-transfer tube (7) joining together the internal volumes of their envelopes,

— after take-off and after a certain quantity of gas has been transferred to the space balloon (8), the transfer tube is caused to be closed,

— the space balloon (8) and the carrier balloon (1) are caused to be separated by cutting the transfer tube (7) and the cable (18) interconnecting the two balloons,

— after sliding of the lower pole (11) of the space balloon along the axial cable (9), said lower pole on said axial cable is effectively locked into the abovementioned predetermined position, thus enabling the condition of fullness of the space balloon to be obtained.

2. Launching and inflating process according to claim 1, characterized in that a carrier balloon (1) is used which is of a general elongated cylindrical form having a height which by far exceeds its diameter.

3. Launching and inflating process according to any one of the claims 1 or 2, characterized in that a carrier balloon (1) is used which is made of a film of high mechanical resistance and in that a space balloon (8) is used which is made of a very thin film having a light weight per unit area.

4. Launching and inflating process according to any one of the claims 1, 2 or 3, wherein a carrier balloon (1) and/or a space balloon (8) is/are used, produced by using longitudinal envelope sections (5) assembled side-by-side by means of longitudinal reinforcement strips (6) which are adapted to withstand the longitudinal forces acting upon the enveloppe of the balloons, said process being characterized in that the transfer tube (7) is fixed onto the envelope of each of the balloons around an opening (1a, 8a) provided in said envelope, in that balloons are used whose reinforcement strips (6) extend, at the level of this opening, to the axial cable, and in that said reinforcement strips are fastened to said axial cable.

5. Launching and inflating process according to claim 4, characterized in that there is used a carrier balloon produced by means of elongated envelope sections (5) having a constant width over a large portion of their length.

6. Launching and inflating process according to any one of the claims 1, 2, 3, 4 or 5, characterized in that the space balloon (8) in its deflated condition is disposed in a protection cover (22) having a generatrix of least resistance affording said cover to burst open when the balloon is being inflated.

7. Launching and inflating process according to any one of the claims 1, 2, 3, 4, 5 or 6, characterized in that, the transfer tube (7) being extended into the interior of the space balloon with a deformable, supple tube (16), closing off after a certain amount of gas has been transferred to the space balloon is ensured by deforming said supple tube (16) under the influence of hydrostatic pressures exerted thereabout by the gas contained in the space balloon.

8. Launching and inflating process according to claim 7, characterized in that the aforementioned supple tube (16) is surrounded by a resistant casing (17), permeable by gas and adapted to prevent said supple tube from being deformed in outward direction.

9. Launching and inflating process according to any one of the claims 1, 2, 3, 4, 5, 6, 7 or 8, characterized in that locking the lower pole (11) of the space balloon (8) on the cable (9) is brought about by a member integral with said pole engaging a cooperating member (12) fastened to the cable.

10. Launching process according to any one of the claims 1, 2, 3, 4, 5, 6, 7, 8 or 9, wherein the transfer tube (7) between the two balloons is provided with a torsion-preventing device (19).

11. Launching process according to any one of the claims 1, 2, 3, 4, 5, 6, 7, 8, 9 or 10, characterized in that the cable (18) interconnecting the two balloons is provided with a device (23) for measuring the tension of said cable, the separation of the space balloon (8) and the carrier balloon (1) being activated when said tension drops below a preset value.

12. Carrier balloon for carrying out the process according to any one of the preceding claims, characterized in that it comprises a cable (2) provided between its lower pole (4) and its upper pole (3), and in that it has a general elongated, very roughly cylindrical form over a large portion of its length.

13. Carrier balloon according to claim 12, produced by means of longitudinal envelope sections (5) assembled side-by-side by means of longitudinal reinforcement strips (6), characterized in that the envelope sections (5) of said balloon each have a width which is approximately constant over a large portion of their length, the reinforcement strips (6) extending, at the level of an opening (1a) provided in the lower pole (4) of the balloon, to the axial cable (2) to which they are fastened.

**Ansprüche**

1. Verfahren zum Starten und Aufblasen eines eine Laste mitführenden Raumfahrballons, in dem ein zusätzlicher Trägerballon mit einem Volumen, das kleiner als das des Raumfahrballons

ist, verwendet wird, der Raumfahrballon in seinem entleerten Zustand unter den Trägerballon befestigt wird und der Trägerballon teilweise mittels eines Gases, das leichter als Luft ist, aufgeblasen wird um das Aufsteigen der zwei Ballons und nach Aufstieg eine Übertragung von Gas in den Raumfahrballon zu bewirken, wobei das Verfahren sich dadurch gekennzeichnet, dass :

— ein Raumfahrballon (8) verwendet wird, der mit einem nicht streckbaren oder wenig streckbaren Axialseil (9) versehen ist, an dem der obere Pol (10) des Ballons befestigt ist und auf dem sein unterer Pol (11) bis an eine vorbestimmte Stellung des unteren Pols am Axialseil verschieben kann, wobei die Last (13) genanntem Axialseil angehängt ist,

— ein zusätzlicher Trägerballon (1) verwendet wird, der zwischen seinem oberen Pol (3) und seinem unteren Pol (4) mit einem nicht streckbaren oder wenig streckbaren Axialseil (2) versehen ist und einen angepassten hohen Widerstand hat, derart, dass er die in den durchzugehenden Atmosphärenschichten auftretenden Beanspruchungen ertragen kann,

— der Raumfahrballon (8) im entleerten Zustand einerseits dadurch unter den Trägerballon (1) befestigt wird, das die Axialseile (9, 2) der zwei Ballons mittels eines Seiles (18) verbunden werden, andrerseits dadurch, dass zwischen denselben ein Gasübertragungsschlauch (7), welcher die Innenvolumen ihrer Hülle mit einander vereinigt, angebracht wird,

— nach dem Aufstieg und der Übertragung einer bestimmten Gasmenge in den Raumfahrballon (8), die Absperrung des Übertragungsschlauch (7) bewirkt wird,

— die Abtrennung des Raumfahrballons (8) und des Trägerballons (1) dadurch bewirkt wird, dass der Übertragungsschlauch (7) und das die zwei Ballons verbindende Seil (18) durchgeschnitten werden,

— nachdem der untere Pol (11) des Raumfahrballons dem Axialseil (9) entlang verschoben ist, die Blockierung des unteren Pols an dem Axialseil in obengenannter vorbestimmter Stellung gesichert wird, wobei der Vollheitzzustand des Raumfahrballons erreicht werden kann.

2. Start- und Aufblaseverfahren nach Anspruch 1, dadurch gekennzeichnet, dass ein Trägerballon (1) einer allgemeinen langgestreckten zylindrischen Form mit einer Höhe, die bedeutend grösser als sein Diameter ist, verwendet wird.

3. Start- und Aufblaseverfahren nach einem der Ansprüche 1 oder 2, dadurch gekennzeichnet, dass ein mit einer einen hohen mechanischen Widerstand aufweisenden Haut hergestellter Trägerballon (1) verwendet wird und dass ein mit einer sehr dünnen Haut mit geringem Flächengewicht hergestellter Raumfahrballon (8) verwendet wird.

4. Start- und Aufblaseverfahren nach einem der Ansprüche 1, 2 oder 3, in dem ein Trägerballon (1) bzw. ein Raumfahrballon (8) verwendet wird, welche mittels in Längsrichtung verlaufender Hüllenteile (5) hergestellt werden, welche mittels Längsverstärkungsstreifen (6), die sich dazu eignen, die auf die Hülle der Ballons ausgeübten Kräfte zu ertragen, mit einander vereinigt werden, wobei das Verfahren sich dadurch gekennzeichnet, dass der Übertragungsschlauch (7) an die Hülle jedes Ballons um eine in dieser Hülle vorgesehene Öffnung (1a, 8a) befestigt wird, dass Ballons, deren Verstärkungsstreifen (6) sich in der Höhe dieser Öffnung bis an das Axialseil erstrecken, verwendet werden und dass diese Verstärkungsstreifen an gennantes Axialseil befestigt werden.

5. Start- und Aufblaseverfahren nach Anspruch 4, dadurch gekennzeichnet, dass ein Trägerballon, der mittels langgestreckter Hüllenteile (5), die eine über einen grossen Teil ihrer Höhe gleichbleibende Breite aufweisen, hergestellt ist, verwendet wird.

6. Start- und Aufblaseverfahren nach einem der Ansprüche 1, 2, 3, 4 oder 5, dadurch gekennzeichnet, dass der Raumfahrballon (8) im entleerten Zustand in eine Schutzhülle (22) untergebracht wird, die eine Linie des geringsten Widerstandes, die beim Aufblasen des Ballons das Reissen der Hülle ermöglicht, aufweist.

7. Start- und Aufblaseverfahren nach einem der Ansprüche 1, 2, 3, 4, 5 oder 6, dadurch gekennzeichnet, dass, da der Übertragungsschlauch (7) bis in das Innere des Raumfahrballons mit einem verformbaren nachgiebigen Schlauch (16) verlängert ist, nach Übertragung einer bestimmten Gasmenge in den Raumfahrballon die Absperrung durch Verformung des nachgiebigen Schlauches (16) durch die Wirkung der vom im Raumfahrballon enthaltenen Gas um den Schlauch ausgeübten hydrostatischen Drücke gesichert wird.

8. Start- und Aufblaseverfahren nach Anspruch 7, dadurch gekennzeichnet, dass vorgenannter nachgiebiger Schlauch (16) von einer luftdurchdringlichen, widerstandsfähigen Hülse (17) eingeschlossen ist, die sich dazu eignet, eine nach aussen gerichtete Deformierung des nachgiebigen Schlauches zu verhindern.

9. Start- und Aufblaseverfahren nach einem der Ansprüche 1, 2, 3, 4, 5, 6, 7 oder 8, dadurch gekennzeichnet, dass die Blockierung des unteren Pols (11) des Raumfahrballons (8) an dem Seil (9) durch Ineinandergreifen eines mit dem Pol fest verbundenen Organs und eines damit zusammenwirkenden, an dem Seil befestigten Organs zustande gebracht wird.

10. Startverfahren nach einem des Ansprüche 1, 2, 3, 4, 5, 6, 7, 8 oder 9, in dem der Übertragungsschlauch (7) zwischen den zwei Ballons mit einem Antitorsionsmittel (19) versehen wird.

11. Startverfahren nach einem der Ansprüche 1, 2, 3, 4, 5, 6, 7, 8, 9 oder 10, dadurch gekennzeichnet, dass das die zwei Ballons verbindende Seil (18) mit einem Mittel (23) zur Messung der Spannung dieses Seiles versehen wird, wobei die Abtrennung des Raumfahrballons (8) und des Trägerballons (1) gesteuert wird, wenn die Spannung bis zu einem vorbestimmten Wert senkt.

12. Trägerballon zur Durchführung des Verfahrens nach einem der vorhergehenden Ansprüche, dadurch gekennzeichnet, dass er zwischen seinem unteren Pol (4) und seinem oberen Pol (3) ein Seil (2) enthält und dass er eine allgemeine langgestreckte sehr annähernd zylindrische Form über einen grossen Teil seiner Höhe aufweist.

13. Trägerballon nach Anspruch 12, der mittels nebeneinander durch Längsverstärkungsstreifen (6) vereinigter in Längsrichtung verlaufender Hüllenteile (5) hergestellt ist, dadurch gekennzeichnet, dass die Hüllenteile (5) des Ballons je eine über einen grossen Teil ihrer Höhe nahezu gleichbleibende Breite aufweisen, wobei sich die Verstärkungsstreifen (6) in der Höhe einer am unteren Pol (4) des Ballons vorgesehenen Öffnung (1a) bis an das Axialseil (2), woran si befestigt werden, erstrecken.

Fig.1

Fig. 3

Fig. 2

3

2

1

4

5

2

4

6

7

Fig. 4

5

6

Fig. 5

6

5

Fig.6

Fig. 7

Fig. 8

Fig. 9

Fig. 10

Fig. 11

Fig. 12

Fig. 13

Fig. 14

Fig. 15